# EUROPÄISCHE PATENTSCHRIFT

(11) **EP 2 049 960 B1**
(45) Veröffentlichungstag und Bekanntmachung des Hinweises auf die Patenterteilung: **01.02.2012**
(21) Anmeldenummer: 07788009.4
(22) Anmeldetag: 27.07.2007
(51) Int. Cl.: G05B 19/418, G05B 19/042, G06F 1/26, H04L 12/10

(54) **VERFAHREN ZUR INBETRIEBNAHME VON MINDESTENS EINEM FELDGERÄT**
METHOD FOR THE STARTING UP OF AT LEAST ONE FIELD INSTRUMENT
PROCÉDÉ DE MISE EN SERVICE D'AU MOINS UN APPAREIL DE TERRAIN

(30) Priorität: 07.08.2006 DE 102006036770
(43) Veröffentlichungstag der Anmeldung: 22.04.2009
(73) Patentinhaber: SIEMENS AKTIENGESELLSCHAFT, 80333 München (DE)
(72) Erfinder: SCHIMMER, Jürgen, 90473 Nürnberg (DE); SCHMIDT, Richard, 91083 Baiersdorf (DE); BÖLDERL-ERMEL, Wolfgang, 90530 Wendelstein (DE); KASPER, Michael, 90411 Nürnberg (DE)
(86) Internationale Anmeldenummer: PCT/EP2007/057795
(87) Internationale Veröffentlichungsnummer: WO 2008/017597

(56) Entgegenhaltungen:
- EP-A- 1 383 268
- EP-A2- 0 836 966
- WO-A-2006/032588
- US-A1- 2005 288 799

## Beschreibung

Die Erfindung betrifft ein Verfahren zur Inbetriebnahme und zum Betrieb von mindestens einem Feldgerät im Allgemeinen und ein Verfahren zur Inbetriebnahme eines Feldgeräts, dessen Energiebedarf über eine Ethernet-Verbindung (Power over Ethernet) bereitgestellt wird, im Besonderen. In einem anderen Aspekt betrifft die Erfindung ein Feldgerät.

### Stand der Technik

Power over Ethernet (PoE) bezeichnet eine Technologie, mit der netzwerkfähige Geräte über das 8-adrige Ethernetkabel mit Strom versorgt werden können. Im engeren Sinne wird heute mit PoE meist der IEEE-Standard 802.3af gemeint, der im Juli 2003 in seiner endgültigen Fassung verabschiedet wurde. Vorher gab es bereits einige herstellerspezifische Implementierungen, die ebenfalls unter der Bezeichnung Power over Ethernet firmierten.

Hauptvorteil von Power over Ethernet ist, dass man ein Stromversorgungskabel einsparen kann und so auch an schwer zugänglichen Stellen oder in Bereichen, in denen viele Kabel stören würden, Ethernet-angebundene Geräte installieren kann. Somit lassen sich einerseits zum Teil Installationskosten einsparen, andererseits kann der damit einfach zu realisierende Einsatz einer zentralen, unterbrechungsfreien Stromversorgung (USV) die Ausfallsicherheit der angeschlossenen Geräte erhöhen.

Power over Ethernet wird in der Regel von Consumergeräten genutzt, die wenig Leistung verbrauchen. Beispiele hierfür sind IP-Telefone, kleine Hubs, kleine Kameras, kleine Server oder schnurlose Übertragungsgeräte (WLAN, ACCESS-Points, FSO-Geräte, BlueTooth-ACCESS-Points).

Power over Ethernet findet auch Verwendung in der Automatisierungstechnik, zum Beispiel bei Feldgeräten in Fertigungs- oder Logistik-Applikationen. Dabei werden die einzelnen Feldgeräte, aus denen eine Fertigungs- oder Logistikapplikation besteht, über die Ethernet-Technologie miteinander vernetzt.

Gemäß dem IEEE-Standard 802.3af werden die beteiligten Geräte in Energieversorger (Power Sourcing Equipment, PSE) und Verbraucher (Powered Devices, PD) unterteilt. Die Energieversorger werden im Folgenden auch als Versorgungseinheiten bzw. als Leistungsversorgungseinheiten bezeichnet. Die Verbraucher werden im Folgenden auch als Leistungsentnahmeeinheiten bezeichnet. Die Versorgungsspannung, mit der ein Verbraucher im Betrieb versorgt wird, beträgt 48 Volt. Die maximale Stromaufnahme der Feldgeräte beträgt dabei 350 mA im Dauerbetrieb. Kurzzeitig sind beim Einschalten 400 mA erlaubt. Daraus ergibt sich eine maximale Leistungsaufnahme von 15,4 Watt. Zur Übertragung der Leistung werden sowohl freie Aderpaare als auch die signalführenden Adern im Ethernetkabel verwendet.

Die Herausforderung für die Hersteller proprietärer PoE-Lösungen bestand früher darin, Schäden an nicht PoE-fähigen Endgeräten zu vermeiden.

Der Standard 802.3af löst dieses Problem durch ein als Resistive Power Discovery bezeichnetes Verfahren. Hierbei legt der Energieversorger, also die Versorgungseinheit, zunächst mehrfach einen nur minimalen Strom auf die Adern der Ethernet-Verbindung, über die ein Verbraucher an die Versorgungseinheit angeschlossen ist, wobei sich mit dem minimalen Strom im Normalfall kein Gerät beschädigen lässt. Der Energieversorger erkennt dabei, ob und wo der Verbraucher einen 25 kohm Anschlusswiderstand besitzt und damit Power over Ethernetfähig ist. Daraufhin wird der Verbraucher mit einer geringen Leistung versorgt und muss nun signalisieren, zu welcher von vier im Standard definierten Leistungsklassen er gehört. Erst dann bekommt der Verbraucher die volle Leistung und kann den Betrieb aufnehmen.

Die Stromversorgung der Feldgeräte bzw. der Verbraucher kann dabei durch so genannte Endspan-Devices (zum Beispiel Switches) oder Midspan-Devices (Einheiten zwischen Switch und Feldgerät) erfolgen. Als Midspan-Devices werden zumeist Hubs eingesetzt, die Strom auf die jeweiligen Drähte liefern. Zur Midspan-Einspeisung wird zwischen dem Ethernet-Switch und den Feldgeräten, also den PD-Geräten, ein so genannter Power Feeder oder ein Midspan-Insertion-Panel platziert. Diese Systeme ähneln Patch-Panels und haben typischerweise zwischen 6 und 24 Kanälen. Jeder Power Feeder verfügt über einen Eingang für die hereinkommenden Daten und einen kombinierten Ausgang für Daten und Stromversorgung via PoE.

Die von einem derartigen Ethernet-Switch oder Power Feeder bereitgestellte gesamte Speiseleistung ist aus Verlustleistungsgründen begrenzt. Jedes Endgerät kann an seinem Leitungsanschluss, also an seinem Port, über den das Feldgerät mit der Versorgungseinheit verbunden ist, ein bestimmtes Leistungs-Budget anfordern. Dieses Leistungsbudget wird von den Feldgeräten über eine definierte Leistungsimpedanz wie bereits oben erwähnt, in mehreren Stufen klassifiziert.

In vielen industriellen Anwendungen kommen Ethernet-Technologien mit Linienstruktur zum Einsatz. Derartige Linienstrukturen sind zum Beispiel bei Fertigungs- oder Logistikapplikationen vorteilhaft. Die Feldgeräte, welche in einer Linienstruktur miteinander kommunizieren, müssen über jeweils mindestens zwei Kommunikations-Ports verfügen. Einer dieser Ports dient z.B. der Verbindung mit dem übergeordneten System oder einem Switch. Ein zweiter Port dient zur Weiterleitung der Daten an das benachbarte Feldgerät.

Bei derartig aufgebauten Linien- oder auch Ring-Topologien kann die Stromversorgung nach dem standardisierten Power over Ethernet-Verfahren gemäß dem IEEE-Standard 802.3af nicht für mehrere zum Beispiel in Linie angeordnete PoE-Feldgeräte angewendet werden. Ein Grund ist, dass der speisende PSE-Switch bzw. der speisende Power Feeder nicht mehrere hintereinander geschaltete Verbraucher mit Strom versorgen kann, da nur der dem Power over Ethernet-Switch bzw. dem Power Feeder unmittelbar benachbarte Verbraucher seinen eigenen Leistungsbedarf signalisieren kann. Der erste der in einer Linie angeordneten Verbraucher könnte zwar stets das maximale Leistungsbudget anfordern. Dies wäre zum einen jedoch nicht konform zu IEEE 802.3af, da seine tatsächliche Leistungsaufnahme meist erheblich niedriger ist. Zum anderen kann durch nachgeschaltete Verbraucher dieses maximale Leistungsbudget überschritten werden, was zum Abschalten der gesamten Linie durch die Versorgungseinheit führen wird.

Aus der WO 2006/032588 A1 ist ein Kommunikationssystem entsprechend dem IEEE-Standard 802.3af bekannt, in welchem modular aufgebaute Netzwerkgeräte eingesetzt werden. Ein modulares Netzwerkgerät besteht aus mehreren, in einer Linie hintereinander angeordneten Netzwerkelementen. Jedes der Netzwerkelemente weist einen elektrischen Widerstand als passives Bauelement auf. Diese sind in der Verschaltung der Netzwerkelemente über einen Bus miteinander verbunden. Das erste Netzwerkelement des Netzwerkgeräts ermittelt mit Hilfe einer Baugruppe den am Bus resultierenden Gesamtwiderstand als einen charakterisierenden Parameter, der eine Aussage über den Energiebedarf des modularen Netzwerkgeräts ermöglicht. Damit kann einem Versorgungsgerät der tatsächliche Energiebedarf des Netzwerkgeräts signalisiert werden.

Aus der EP 0 836 966 A2 ist eine Anordnung zur elektrischen Energieversorgung bekannt, in welcher Verbraucher längs einer Spannungsversorgungsleitung in einem Ring angeordnet sind. Durch eine Prüfeinrichtung kann ein Kurzschlussfehler in der Versorgungsleitung festgestellt werden. Bei Vorliegen eines Fehlers wird durch eine Schaltereinrichtung verhindert, dass die Versorgungsspannung zu einem Kurzschluss durchgeschaltet wird.

Aufgabe der Erfindung ist es daher, ein verbessertes Verfahren zur Inbetriebnahme von mindestens einem Feldgerät anzugeben, so dass sich verfahrensgemäß auch mehrere hintereinander geschaltete Feldgeräte, z.B. in einer Linienstruktur oder Ringstruktur, in Betrieb nehmen lassen. Aufgabe der Erfindung ist es ferner, ein verbessertes Feldgerät anzugeben.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Durch die Erfindung wird ein verbessertes Verfahren zur Inbetriebnahme von mindestens einem ersten Feldgerät angegeben, wobei das Verfahren den Schritt der Signalisierung eines ersten elektrischen Leistungsbedarfs des ersten Feldgeräts über einen ersten Port an eine Versorgungseinheit aufweist, wobei das Feldgerät über den ersten Port mittels einer ersten Kommunikationsverbindung zuvor an die Versorgungseinheit angeschlossen worden ist. Das Verfahren weist ferner den Schritt der Aufnahme der elektrischen Leistung entsprechend dem ersten elektrischen Leistungsbedarf durch das erste Feldgerät über die erste Kommunikationsverbindung und den ersten Port auf, wodurch das erste Feldgerät aktiviert wird. Ferner weist das Verfahren den Schritt der Zuweisung einer Leistungsentnahmeeinheit des ersten Feldgeräts an den ersten Port auf, wobei die Leistungsentnahmeeinheit als Verbraucher für die Leistung vorgesehen ist. Zudem weist das Verfahren den Schritt der Zuweisung einer Leistungsversorgungseinheit des ersten Feldgeräts an einem zweiten Port auf, wobei die Leistungsversorgungseinheit für die Bereitstellung eines zweiten Leistungsbedarfs über den zweiten Port vorgesehen ist.

Das erste Feldgerät signalisiert nach Anschluss des ersten Ports über die erste Kommunikationsverbindung an die Versorgungseinheit seinen ersten Leistungsbedarf. Signalisierung bedeutet hier beispielsweise, dass auf der Seite des Feldgeräts eine Impedanz definierter Größe (25 kOhm) als gerätespezifische Signatur vorhanden ist, so dass das Feldgerät wie vom IEEE-Standard 802.3af vorgesehen, als PD-Gerät von der Versorgungseinheit erkannt werden kann und dadurch von der Versorgungseinheit der erste elektrische Leistungsbedarf des ersten Feldgeräts ermittelt werden kann. Die Versorgungseinheit kann dann durch Bereitstellung der dem ersten Leistungsbedarf entsprechenden Leistung, die vom Feldgerät aufgenommen wird, das Feldgerät aktivieren. Das Feldgerät weist eine Leistungsentnahmeeinheit auf, die dann dem ersten Port zugewiesen wird. Die Leistungsentnahmeeinheit ist als Verbraucher für die bereitgestellte Leistung vorgesehen. Das Feldgerät weist somit am ersten Port PD-Eigenschaften auf. Ferner wird die Leistungsversorgungseinheit des Feldgeräts dem zweiten Port zugewiesen. Das erste Feldgerät weist damit am zweiten Port PSE-Eigenschaften auf.

Nach einer Ausführungsform der Erfindung weist das Verfahren ferner den Schritt der Detektion eines zweiten Feldgeräts über den zweiten Port des ersten Feldgeräts auf, wobei das zweite Feldgerät zuvor an dem zweiten Port des ersten Feldgeräts über eine zweite Kommunikationsverbindung angeschlossen worden ist. Ferner erfolgt die Ermittlung des zweiten elektrischen Leistungsbedarfs des zweiten Feldgeräts über die zweite Kommunikationsverbindung. In einem weiteren Schritt erfolgt die Ermittlung des gesamten elektrischen Leistungsbedarfs aus dem ersten und zweiten elektrischen Leistungsbedarf. Des Weiteren erfolgt die Übermittlung des gesamten elektrischen Leistungsbedarfs an die Versorgungseinheit. In einem weiteren erfindungsgemäßen Verfahrensschritt findet die Aufnahme der gesamten Leistung entsprechend dem gesamten Leistungsbedarf durch das erste Feldgerät statt, wobei die gesamte Leistung von der Versorgungseinheit bereitgestellt wird, falls die Versorgungseinheit die gesamte Leistung bereitstellen kann. Zudem erfolgt die Versorgung des zweiten Feldgeräts mit der Leistung entsprechend dem zweiten elektrischen Leistungsbedarf für den Fall, dass die gesamte Leistung vom ersten Feldgerät erhalten wird.

Das zweite Feldgerät wird also, nachdem das erste Feldgerät von der Versorgungseinheit in Betrieb genommen worden ist, über das erste Feldgerät und über die ersten und zweiten Kommunikationsverbindungen mit der Versorgungseinheit verbunden und erfindungsgemäß durch das erste Feldgerät in Betrieb genommen. Die Erfindung ist besonders vorteilhaft, da mehrere, hintereinander geschaltete Verbraucher von einem vorgeschalteten Versorgungsgerät mit Strom versorgt werden können. Dies ist, wie bereits zuvor oben erwähnt, in dem IEEE-Standard 802.3af nicht vorgesehen.

Nach einer weiteren Ausführungsform der Erfindung weist das Verfahren ferner den Schritt der Überwachung des vom ersten Feldgerät gespeisten zweiten Ports auf. Das erfindungsgemäße Verfahren umfasst ferner den Schritt der Unterbrechung der Versorgung des zweiten Feldgeräts im Falle eines Kurzschlusses oder eines Überstroms in der zweiten Kommunikationsverbindung. Eine Selbstorganisation der PoE-Linie ergibt sich daraus, dass jedes Feldgerät, wie hier das erste Feldgerät im laufenden Betrieb, den von ihm gespeisten abgehenden Port, wie hier den zweiten Port, zum Beispiel kontinuierlich überwacht. Bei Überstrom oder bei Kurzschluss in der abgehenden Verbindung unterbricht das speisende Gerät die Stromversorgung zu dem Nachbargerät, wie hier zum zweiten Feldgerät. Damit ist eine Selektivität im Fehlerfall gegeben, d.h. es wird nicht die gesamte Linie, sondern es werden nur die vom Kurzschluss betroffenen Geräte von der Stromversorgung getrennt.

Nach einer Ausführungsform der Erfindung weist das erfindungsgemäße Verfahren ferner den Schritt der Speicherung eines Teils der erhaltenen elektrischen Energie und den Schritt der Überwachung des speisenden ersten Ports auf. Dadurch kann eine Unterbrechung der Energieversorgung des ersten Feldgeräts detektiert werden. Ferner folgt der Schritt der Vertauschung der Zuordnung der Leistungsentnahmeeinheit und der Leistungsversorgungseinheit zu dem ersten und zweiten Port auf, falls eine Unterbrechung der Energieversorgung detektiert wird.

Durch die Überwachung des speisenden Ports kann eine Unterbrechung der Energieversorgung rechtzeitig erkannt werden. Das Feldgerät, wie hier zum Beispiel das erste Feldgerät, kann dann die Zuordnung PSE/PD zu seinen Ports vertauschen. Ist das Feldgerät zum Beispiel in einer Ringtopologie eingebaut, so kann bei geeigneter Pufferung bzw. Energiespeicherung eines Teils der vom Feldgerät bereits erhaltenen elektrischen Energie das Gerät trotz der Unterbrechung des Stroms aktiv bleiben und die Energieflussrichtung umkehren, so dass es zum Beispiel vom zweiten Port gespeist wird.

Nach einer Ausführungsform der Erfindung wird eine Änderung des zweiten Leistungsbedarfs des zweiten Feldgeräts durch das erste Feldgerät detektiert, wobei der geänderte gesamte Leistungsbedarf an die Versorgungseinheit übermittelt wird und wobei die Leistung entsprechend dem geänderten zweiten Leistungsbedarf dem zweiten Feldgerät zur Verfügung gestellt wird für den Fall, dass die Leistung entsprechend dem geänderten gesamten Leistungsbedarf vom ersten Feldgerät aufgenommen wird. Das erste Feldgerät kann somit eine Änderung des zweiten Leistungsbedarfs des zweiten Feldgeräts jederzeit im laufenden Betrieb detektieren und entsprechend einen geänderten gesamten Leistungsbedarf von der Versorgungseinheit anfordern. Dies ist zum Beispiel vorteilhaft, wenn ein drittes Gerät an das zweite Gerät angeschlossen wird, das dann so wie das zweite Feldgerät vom ersten Feldgerät in Betrieb genommen worden ist, nun vom zweiten Feldgerät in Betrieb genommen wird. Das zweite Feldgerät meldet dann als geänderten zweiten Leistungsbedarf den Leistungsbedarf von sich selbst und vom dritten Feldgerät an das erste Feldgerät, das entsprechend nun den geänderten gesamten Leistungsbedarf an die Versorgungseinheit übermittelt. Für den Fall, dass das erste Gerät den geänderten gesamten Leistungsbedarf aufnehmen kann, stellt es dem zweiten Feldgerät die entsprechend angeforderte Leistung zur Verfügung. Das zweite Feldgerät kann dann das dritte Feldgerät, wie zuvor für das erste und zweite Feldgerät beschrieben, aktivieren. Das erfindungsgemäße Verfahren hat den Vorteil, dass sich durch die erfindungsgemäße Ausgestaltung der Feldgeräte nun Linienstrukturen bzw. auch Ringstrukturen realisieren lassen. Die dem speisenden Switch bzw. Power Feeder benachbarten Feldgeräte werden nacheinander aktiviert. Dieser Vorgang führt bei der Inbetriebsetzung zu keiner merklichen Verzögerung der Kommunikation. Ferner erfordert das erfindungsgemäße Verfahren keine besondere Projektierung der einzelnen Feldgeräte. Weiterer Vorteil ist, dass die für die Linienstruktur bzw. für die Ringstruktur zur Verfügung stehenden Leistungs-Budgets und der Strombedarf der angeschlossenen Geräte mit jedem weiteren aktivierten Gerät angeglichen werden, da das dem weiteren Gerät vorhergehende Gerät immer die benötigte Leistung von dem vorhergehenden Gerät anfordern muss. Eine Überlastung der gesamten Linienstruktur ist dadurch ausgeschlossen.

Nach einer Ausführungsform der Erfindung wird der gesamte Leistungsbedarf oder der geänderte gesamte Leistungsbedarf vom Feldgerät mittels des SNMP-Protokolls (Simple Network Management Protocol) an die Versorgungseinheit übermittelt.

Nach einer Ausführungsform der Erfindung wird das zweite Feldgerät vom ersten Feldgerät mittels des LLDP-Protokolls (Link Layer Discovery Protocol) detektiert.

Nach einer Ausführungsform der Erfindung weisen die Feldgeräte im stromlosen Zustand am ersten und zweiten Port eine gerätespezifische Signatur auf, wobei die gerätespezifische Signatur die Feldgeräte als Leistungsentnahmeeinheiten ausweist, wobei die gerätespezifische Signatur nach Aktivierung des Feldgeräts deaktiviert wird. Wie bereits weiter oben erwähnt, weisen die Geräte erfindungsgemäß im stromlosen Zustand an ihren Ports eine Signatur auf, mit der sie gemäß dem IEEE 802.3af-Standard als PD-Geräte erkennbar sind. Da insbesondere der zweite Port, der bei aktiviertem Feldgerät als PSE-Port verwendet wird, beim aktivierten Gerät keine PD-Funktionalität mehr aufweisen darf, wird die gerätespezifische Signatur nach der Aktivierung des Geräts deaktiviert.

Nach einer Ausführungsform der Erfindung (erfolgt die Ermittlung des zweiten Leistungsbedarfs des zweiten Feldgeräts über die gerätespezifische Signatur des zweiten Feldgeräts.

Nach einer Ausführungsform der Erfindung kann nach der Aktivierung der Geräte über das SNMP-Protokoll die tatsächliche Leistungsaufnahme der angeschlossenen Geräte übermittelt werden. Diese Leistungsangabe führt durch Summation der einzelnen exakten Leistungen zu einer insgesamt niedrigeren Summenleistung, die als Leistungsbudget von der Versorgungseinheit bereitgestellt werden muss. Im Gegensatz hierzu führt die Summation der nur drei möglichen Leistungsstufen von 4W, 7W und 15,4W, die beim klassischen PoE definiert sind, stets zu einem unnötig hohen Leistungsbudget.

Nach einer Ausführungsform der Erfindung wird die gerätespezifische Signatur mittels einer Leistungsabschluss-Impedanz gemäß dem IEEE 802.3af-Standard realisiert.

Nach einer weiteren Ausführungsform der Erfindung basieren die erste Kommunikationsverbindung und die zweite Kommunikationsverbindung auf der Ethernet-Technologie.

Nach einer Ausführungsform der Erfindung handelt es sich bei der Versorgungseinheit um ein dem ersten Feldgerät vorgeschaltetes Feldgerät oder um einen Power over Ethernet-Switch oder einen Power Feeder.

In einem anderen Aspekt betrifft die Erfindung ein Feldgerät mit mindestens einem ersten und einem zweiten Port, mit mindestens einer Leistungsversorgungseinheit, wobei die Leistungsversorgungseinheit dem ersten Port zugewiesen werden kann und wobei die Leistungsversorgungseinheit für die Bereitstellung elektrischer Leistung über den zugewiesenen Port vorgesehen ist. Das Feldgerät weist ferner mindestens eine Leistungsentnahmeeinheit auf, wobei die Leistungsentnahmeeinheit dem mindestens zweiten Port zugewiesen werden kann, wobei die Leistungsentnahmeeinheit als Verbraucher für die über den zugewiesenen Port empfangene elektrische Leistung vorgesehen ist.

Ausführungsformen der Erfindung werden nachfolgend anhand der Zeichnungen näher erläutert.
- FIG 1: zeigt ein Blockdiagramm einer Linienstruktur mit einer Versorgungseinheit und einem ersten und zweiten Feldgerät,
- FIG 2: stellt in einem Flussdiagramm wesentliche Schritte des erfindungsgemäßen Verfahrens dar,
- FIG 3: zeigt ein Ablaufdiagramm, das die Abläufe zwischen der Versorgungseinheit und dem ersten und zweiten Feldgerät bei Inbetriebnahme der Feldgeräte zeigt,
- FIG 4: zeigt schematisch die Struktur eines Netzwerks, das Linienstrukturen und eine Ringstruktur aufweist,
- FIG 5: zeigt ein Blockdiagramm eines Feldgeräts,
- FIG 6: stellt schematisch in einem Blockdiagramm eines Feldgeräts die Potentialtrennung zwischen beiden Ports des Feldgeräts dar,
- FIG 7: zeigt ein Blockdiagramm eines Feldgeräts mit T-Stück-Funktionalität,

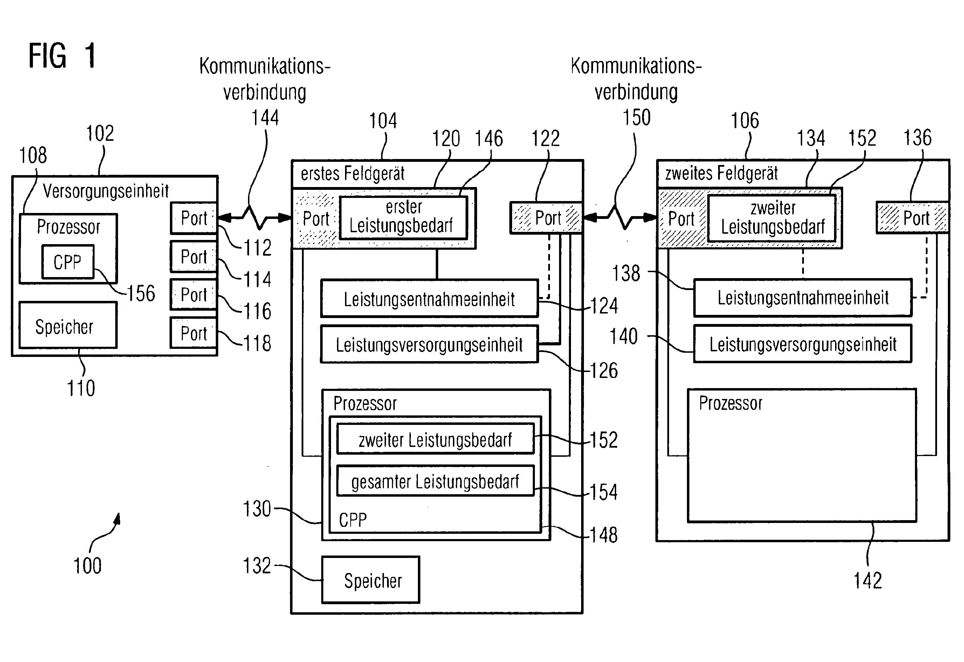

FIG 1 zeigt ein Blockdiagramm einer Linienstruktur 100. Die Linienstruktur 100 weist dabei eine Versorgungseinheit 102, ein erstes Feldgerät 104 und ein zweites Feldgerät 106 auf. Die Versorgungseinheit 102 ist dabei ein Gerät, das PSE-Funktionalität gemäß dem IEEE-Standard 802.3af aufweist. Die Versorgungseinheit 102 wird von extern mit elektrischer Energie versorgt. Die Versorgungseinheit 102 weist zudem einen Prozessor 108, einen Speicher 110 sowie Ports 112, 114, 116 und 118 auf.

Das erste Feldgerät 104 weist einen ersten Port 120 und einen zweiten Port 122 auf. Das erste Feldgerät 104 weist zudem eine Leistungsentnahmeeinheit 124 sowie eine Leistungsversorgungseinheit 126 auf. Ferner weist das erste Feldgerät 104 einen Prozessor 130 und einen Speicher 132 auf.

Das zweite Feldgerät 106 weist ebenso wie das erste Feldgerät 104 einen ersten Port 134, einen zweiten Port 136, eine Leistungsentnahmeeinheit 138, eine Leistungsversorgungseinheit 140 und einen Prozessor 142 auf.

Die Leistungsentnahmeeinheiten 124 und 138 weisen dabei die Funktionalität eines PD-Geräts gemäß dem IEEE-Standard 802.3af auf. Die Leistungsversorgungseinheiten 126 und 140 weisen die Funktionalität eines PSE-Geräts gemäß dem obigen Standard auf. Damit weisen das erste Feldgerät 104 als auch das zweite Feldgerät 106 sowohl PD- als auch PSE-Funktionalität auf.

Das erste Feldgerät 104 signalisiert an seinen Ports 120 und 122 im stromlosen Zustand PD-Eigenschaften gemäß IEEE-Standard 802.3af. Dazu ist die Leistungsentnahmeeinheit 122 im stromlosen Zustand mit dem ersten Port (gekennzeichnet durch die durchgezogene Linie zwischen der Leistungsentnahmeeinheit 124 und dem ersten Port 120)und mit dem zweiten Port 122 (gestrichelte Linie zwischen Leistungsentnahmeeinheit 124 und zweiten Port 122) verbunden. Damit signalisiert das Feldgerät 104, wenn es über eine erste Kommunikationsverbindung 144 z.B. über den Port 120 und den Port 112 mit der Versorgungseinheit 102 verbunden wird, der Versorgungseinheit 102 seine PD-Eigenschaften.

Die Versorgungseinheit 102 kann somit gemäß dem oben genannten Standard den ersten elektrischen Leistungsbedarf 146 des ersten Feldgeräts 104 ermitteln und die Leistung entsprechend dem ersten Leistungsbedarf 146 dem ersten Feldgerät 104 bereitstellen. Durch die Aufnahme der Leistung wird das erste Feldgerät 104 aktiviert.

Dem ersten Port 120 wird nun die Leistungsentnahmeeinheit 124 zugewiesen. Die PD-Signalisierung am zweiten Port 122 wird gesperrt. Die Leistungsversorgungseinheit 126 wird dem zweiten Port 122 zugewiesen. Damit weist der zweite Port 122 PSE-Eigenschaften auf.

Durch die Aktivierung des ersten Feldgeräts 104 wird auch der Prozessor 130 aktiv. Der Prozessor 130 führt ein Computerprogrammprodukt 148 aus, das beim Hochfahren des Prozessors 130 vom Speicher 132, auf dem das Computerprogrammprodukt 148 permanent gespeichert ist, geladen wird.

Das zweite Feldgerät 106 signalisiert im stromlosen Zustand an seinen Ports 134, 136 seine Eigenschaft als PD-Gerät, wie zuvor das erste Feldgerät 104. Wird nun das zweite Feldgerät 106 über seinen ersten Port 134 und über eine zweite Kommunikationsverbindung 150 an den zweiten Port 122 angeschlossen, so kann das erste Feldgerät 104 das zweite Feldgerät 106 detektieren. Dazu nutzt das Computerprogrammprodukt 148 zum Beispiel das LLDP-Protokoll (Link Layer Discovery Protocol).

Die Leistungsversorgungseinheit 126 kann dann gemäß dem IEEE 802.3af-Standard den zweiten elektrischen Leistungsbedarf 152 des zweiten Feldgeräts 106 ermitteln. Das Computerprogrammprodukt 148 ermittelt dann aus dem ersten Leistungsbedarf 146 und dem zweiten Leistungsbedarf 152 einen gesamten elektrischen Leistungsbedarf 154, wobei der gesamte Leistungsbedarf 154 der Summe des ersten Leistungsbedarfs 146 und des zweiten Leistungsbedarfs 152 entspricht.

Das Computerprogrammprodukt 148 sendet nun über die Kommunikationsverbindung 144 eine erste Nachricht zum Beispiel mittels SNMP (Simple Network Management Protocol) an die Versorgungseinheit 102, wobei mit der Nachricht der gesamte Leistungsbedarf 154 an die Versorgungseinheit 102 übermittelt wird.

Der Prozessor 108 führt ein Computerprogrammprodukt 156 aus, das permanent auf dem Speicher 110 gespeichert ist und beim Start der Versorgungseinheit 102 in den Prozessor 108 geladen wird. Mittels des Computerprogrammprodukts 156 wird der gesamte Leistungsbedarf 154 aus der empfangenen Nachricht ausgelesen und überprüft, ob die Versorgungseinheit 102 den gesamten elektrischen Leistungsbedarf 154 zur Verfügung stellen kann. Ist dies der Fall, sendet das Computerprogrammprodukt 156 eine zweite Nachricht an das erste Feldgerät 104, in der die Aufstockung der zur Verfügung gestellten Leistung bestätigt wird.

Sobald der gesamte Leistungsbedarf 154 vom ersten Feldgerät 104 aufgenommen wird, stellt das erste Feldgerät 104 dem zweiten Feldgerät 106 die dem zweiten Leistungsbedarf 152 entsprechende Leistung zur Verfügung. Das zweite Feldgerät 106 wird damit aktiviert. Die Leistungsentnahmeeinheit 138 wird dann dem ersten Port 134 zugewiesen, so dass das zweite Feldgerät 106 an diesem Port PD-Funktionalität aufweist. Ferner wird dann dem zweiten Port 136 die Leistungsversorgungseinheit 140 zugewiesen, so dass der zweite Port 136 PSE-Funktionalität aufweist.

An dem zweiten Port 136 kann ein weiteres Feldgerät (in FIG 1 nicht abgebildet) angeschlossen werden. Das weitere Feldgerät wird dann vom zweiten Feldgerät 106 in Betrieb genommen in der gleichen Art und Weise, wie dieses zweite Feldgerät 106 zuvor durch das erste Feldgerät 104 in Betrieb genommen worden ist. Dabei bestimmt das zweite Feldgerät 106 über den Prozessor 142 und das entsprechende Computerprogrammprodukt (wie Computerprogrammprodukt 148) den gesamten Leistungsbedarf des zweiten Feldgeräts und des weiteren Feldgeräts. Der zweite Leistungsbedarf 152, der nun an das erste Feldgerät übermittelt wird, entspricht dabei dem gesamten Leistungsbedarf des zweiten Feldgeräts 106 und des weiteren Feldgeräts.

Alle Feldgeräte, also auch das Feldgerät 104, überwachen kontinuierlich die versorgten Ports. Damit kann dann das erste Feldgerät 104 den neuen gesamten zweiten Leistungsbedarf detektieren. Dieser geänderte zweite Leistungsbedarf wirkt sich nun auf den gesamten Leistungsbedarf 154 aus, der sich ebenfalls ändert. Der geänderte gesamte Leistungsbedarf wird nun an die Versorgungseinheit 102, wie zuvor der gesamte Leistungsbedarf 154, gemeldet. Falls die Versorgungseinheit 102 den geänderten gesamten Leistungsbedarf zur Verfügung stellen kann, kann das erste Feldgerät 104 diesen gesamten Leistungsbedarf aufnehmen und somit die Leistung entsprechend dem geänderten zweiten Leistungsbedarf dem zweiten Feldgerät 106 zur Verfügung stellen. Das zweite Feldgerät 106 kann dann durch Bereitstellung der entsprechenden Leistung das weitere Gerät aktivieren. So kann eine Linienstruktur aufgebaut werden, die von einer vorgeschalteten Versorgungseinheit 102 gespeist wird.

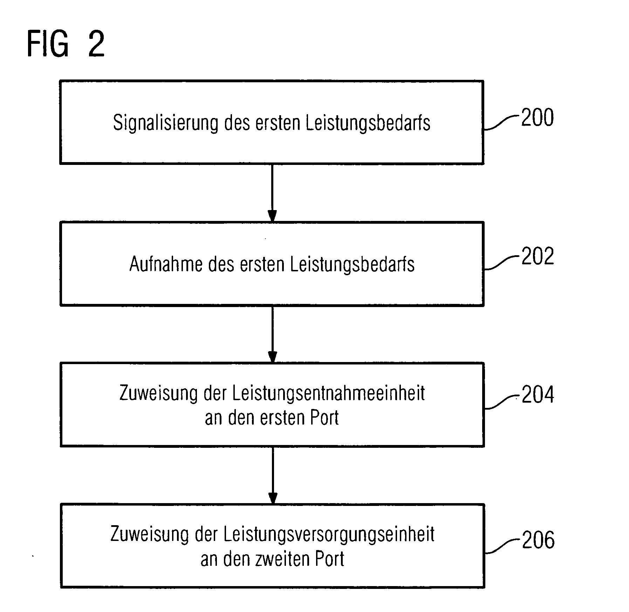

FIG 2 zeigt in einem Flussdiagramm Verfahrensschritte eines Verfahrens zur Inbetriebnahme von mindestens einem ersten Feldgerät. Im Schritt 200 erfolgt die Signalisierung eines ersten elektrischen Leistungsbedarfs des ersten Feldgeräts über einen ersten Port an eine Versorgungseinheit, wobei das Feldgerät über den ersten Port mittels einer ersten Kommunikationsverbindung zuvor an die Versorgungseinheit angeschlossen worden ist. In Schritt 202 erfolgt die Aufnahme der Leistung entsprechend dem ersten elektrischen Leistungsbedarf durch das erste Feldgerät über die erste Kommunikationsverbindung und den ersten Port, wodurch das erste Feldgerät aktiviert wird. In Schritt 204 erfolgt die Zuweisung einer Leistungsentnahmeeinheit des ersten Feldgeräts an den ersten Port, wobei die Leistungsentnahmeeinheit als Verbraucher für die Leistung vorgesehen ist. Ferner erfolgt in Schritt 206 die Zuweisung einer Leistungsversorgungseinheit des ersten Feldgeräts an einen zweiten Port, wobei die Leistungsversorgungseinheit für die Bereitstellung eines zweiten Leistungsbedarfs vorgesehen ist.

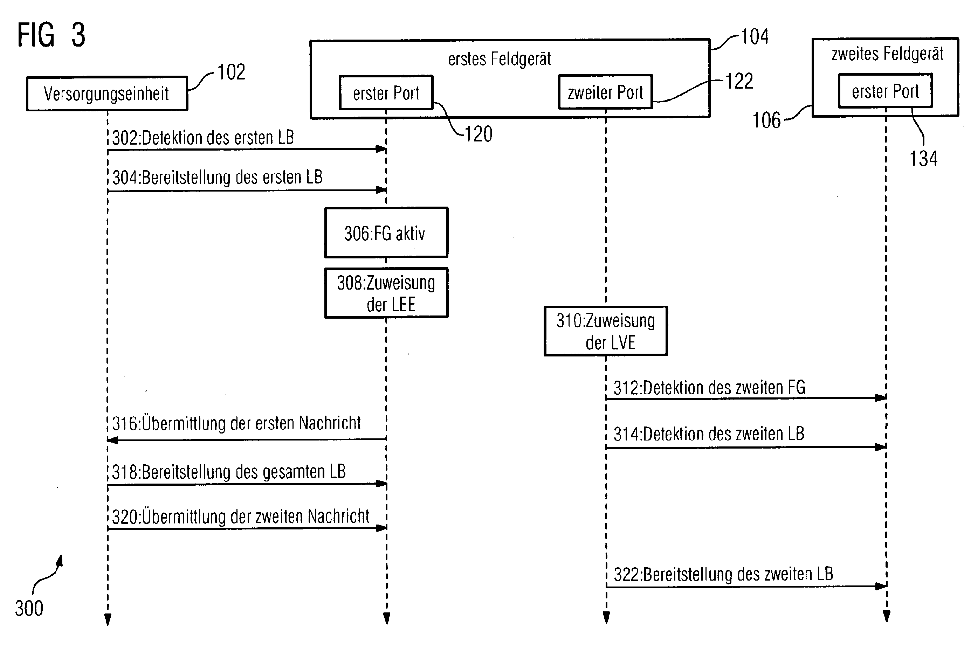

FIG 3 zeigt ein Ablaufdiagramm 300, das die Abläufe zwischen der Versorgungseinheit 102, dem ersten Feldgerät 104 und dem zweiten Feldgerät 106 bei Inbetriebnahme der Feldgeräte 104 und 106 zeigt. Dabei wurden die entsprechenden Bezugszeichen zur Kennzeichnung der Versorgungseinheit und der Feldgeräte bzw. deren Ports aus FIG 1 übernommen. Das erste Feldgerät 104 weist dabei den ersten Port 120 und den zweiten Port 122 auf. Das zweite Feldgerät weist den ersten Port 134 auf (der zweite Port ist aus Gründen der Zweckmäßigkeit hier nicht dargestellt).

Die gestrichelten Linien unter der Versorgungseinheit 102, dem ersten Port 120, dem zweiten Port 122 und dem ersten Port 134 beziehen sich dabei auf die zeitliche Abfolge der Abläufe in den entsprechenden Einheiten. Die Abläufe zwischen den entsprechenden Einheiten sind durch die waagerecht verlaufenden durchgezogenen Pfeile gekennzeichnet. Über den Pfeilen steht jeweils eine Nummer zur Kennzeichnung des ablaufenden Schrittes. Hinter der entsprechenden Nummer folgt eine kurze Beschreibung des Schrittes. Die Pfeile stellen auch PoE-Verbindungen zwischen der Versorgungseinheit 102 und dem ersten Port 120 bzw. zwischen dem zweiten Port 122 und dem ersten Port 134 dar. Die Pfeilrichtung der gestrichelten senkrecht verlaufenden Linien kennzeichnet zudem die Richtung der Zeit.

In Schritt 302 erfolgt die Detektion des ersten elektrischen Leistungsbedarfs (LB) des ersten Feldgeräts 104 durch die Versorgungseinheit 102. In Schritt 304 erfolgt die Bereitstellung der Leistung entsprechend dem ersten elektrischen Leistungsbedarf über den ersten Port 120 für das Feldgerät 104. Damit wird das Feldgerät 104 in Schritt 306 aktiv. In Schritt 308 erfolgt eine Zuweisung der Leistungsentnahmeeinheit (LEE) an den ersten Port und in Schritt 310 erfolgt eine Zuweisung der Leistungsversorgungseinheit (LVE) an den zweiten Port 122.

In Schritt 312 erfolgt die Detektion des zweiten Feldgeräts (FG) 106 durch das erste Feldgerät 104 über den zweiten Port 122. In Schritt 314 erfolgt ferner die Detektion des zweiten elektrischen Leistungsbedarfs (LB) des zweiten Feldgeräts. Ferner erfolgt in Schritt 316 die Übermittlung der ersten Nachricht, die Informationen über den gesamten elektrischen Leistungsbedarf enthält, der sich aus dem ersten Leistungsbedarf und dem zweiten Leistungsbedarf zusammensetzt, an die Versorgungseinheit 102.

Für den Fall, dass die Versorgungseinheit 102 den angeforderten gesamten Leistungsbedarf bereitstellen kann, erfolgt in Schritt 318 die Bereitstellung des gesamten Leistungsbedarfs für das erste Feldgerät 104. Die Versorgungseinheit 102 übermittelt im darauf folgenden Schritt 320 die zweite Nachricht an das erste Feldgerät 104, in der die Bereitstellung des gesamten Leistungsbedarfs angekündigt oder andernfalls verneint wird. Das erste Feldgerät 104 stellt gegebenenfalls in Schritt 322 den zweiten Leistungsbedarf dem zweiten Feldgerät 106 zur Verfügung. Damit kann sich das Feldgerät, wie zuvor in FIG 1 beschrieben, aktivieren.

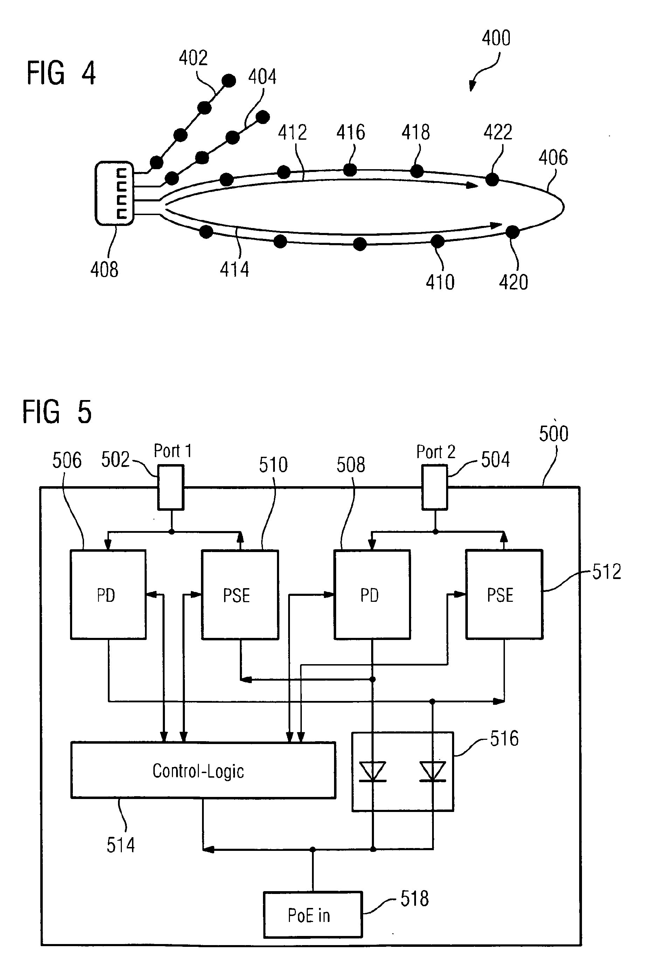

FIG 4 zeigt schematisch die Struktur eines Netzwerks 400, das Linienstrukturen 402, 404 und eine Ringstruktur 406 aufweist. Die Linienstrukturen 402 und 404 sowie die Ringstruktur 406 weisen dabei einen Power over Ethernet Switch 408 als gemeinsamen Knoten auf. Der Power over Ethernet Switch 408 weist dabei die Funktionalität der erfindungsgemäßen Versorgungseinheit auf.

Die einzelnen schwarz ausgefüllten Kreise in den Linienstrukturen 402 bzw. 404 sowie in der Ringstruktur 406 stellen dabei Feldgeräte 410 dar, die gemäß dem zuvor beschriebenen Verfahren in Betrieb genommen worden sind. Die für den Betrieb notwendige Energie wird dabei von dem Power over Ethernet Switch 408 für alle Feldgeräte, wie zum Beispiel für das Feldgerät 410, in der Linienstruktur 402, in der Linienstruktur 404 und in der Ringstruktur 406 bereitgestellt.

Die Verwendung der Ringstruktur 406 hat den Vorteil, dass damit eine redundante Energieversorgung der erfindungsgemäßen Feldgeräte erreicht werden kann. So können zum Beispiel die Feldgeräte entlang des Pfades 412 jeweils in Richtung der Pfeilrichtung des Pfades 412 aktiviert worden sein. Dann wird Feldgerät 418 durch Feldgerät 416 gespeist und das Feldgerät 418 speist Feldgerät 422. In ähnlicher Weise können die Feldgeräte entlang des Pfades 414 entsprechend der Pfeilrichtung des Pfades 414 aktiviert worden sein. Dann ist Feldgerät 410 das speisende Gerät des Feldgeräts 420.

Fällt zum Beispiel das Feldgerät 410 aus oder erfolgt ein Bruch der Leitung zwischen dem Feldgerät 410 und dem Feldgerät 420, dann kann das Feldgerät 420 aufgrund der zuvor beschriebenen kontinuierlichen Überwachung des speisenden Ports die Unterbrechung der Energieversorgung rechtzeitig erkennen. Bei geeigneter Energiespeicherung im Feldgerät 420 kann das Feldgerät nun die Zuordnungs PSE/PD an seinen Ports vertauschen und kann damit die Energieflussrichtung ohne Unterbrechung der Gerätefunktion umtauschen. Das Feldgerät 420 kann dann Leistung über das Feldgerät 422 aufnehmen, wobei dann das Gerät 422 das geänderte Leistungsbudget an das Gerät 418 meldet, das wiederum das geänderte Leistungsbudget an das Gerät 416 usw. meldet.

Weist das Feldgerät 420 keinen Energiespeicher auf, so wird es kurzzeitig deaktiviert und meldet sich dann mit seiner PD-Signatur bei dem Feldgerät 422. Das Feldgerät 422 kann dann das Feldgerät 420 gemäß dem Verfahren in Betrieb nehmen.

FIG 5 zeigt ein Blockdiagramm eines Feldgeräts 500. Das Feldgerät 500 weist dabei einen ersten Port 502 und einen zweiten Port 504 auf. Das Feldgerät 500 weist ferner zwei Leistungsentnahmeeinheiten 506 und 508 sowie zwei Leistungsversorgungseinheiten 510 und 512 auf. Das Feldgerät 510 weist ferner eine Steuerlogik 514 sowie Dioden 516 auf. Die Steuerlogik 514 wirkt auf alle Funktionsblöcke 506, 508, 510 und 512. Jedem Port 502 bzw. 504 ist sowohl eine Leistungsentnahmeeinheit als auch eine Leistungsversorgungseinheit zugeordnet. Dem ersten Port 502 sind die Leistungsentnahmeeinheit 506 und die Leistungsversorgungseinheit 510 zugeordnet. Dem zweiten Port 504 sind die Leistungsentnahmeeinheit 508 sowie die Leistungsversorgungseinheit 512 zugeordnet. Für die Weiterleitung der aufgenommenen elektrischen Leistung über den ersten Port 502 oder über den zweiten Port 504 sind die Leistungsentnahmeeinheiten 506 und 508 bzw. die Leistungsversorgungseinheiten 510 und 512 kreuzweise gekoppelt. Die Eigenstromversorgung des Geräts wird aus beiden Leistungsentnahmeeinheiten 506 und 508 über die Dioden 516 und über die Eigenversorgung 518 (PoE in) des Gerätes zusammengefasst.

Im stromlosen Zustand liefern die Leistungsentnahmeeinheiten 506 und 508 eine dem Standard entsprechende PD-Signatur an den zugeordneten Ports 502 und 504.

Nach Aktivierung des Feldgeräts 500 durch eine vorgeschaltete Versorgungseinheit wird die PD-Signatur an den nicht gespeisten Ports deaktiviert und die Leistungsentnahmeeinheit dem gespeisten Port zugewiesen. Zudem wird die Leistungsversorgungseinheit dem nicht gespeisten Port zugewiesen. Wird z.B. das Feldgerät 500 über den Port 502 versorgt, so wird die Leistungsentnahmeeinheit 506 dem Port 502 zugewiesen; die Leistungsversorgungseinheit 510 wird vom Port 502 abgekoppelt. Entsprechend wird dann die Leistungsversorgungseinheit 512 dem Port 504 zugewiesen und die Leistungsentnahmeeinheit 508 wird vom Port 504 abgekoppelt.

Für die Weiterleitung der aufgenommenen elektrischen Leistung über den ersten oder über den zweiten Port 502 oder 504 sind die Leistungsentnahmeeinheiten 506 und 508 bzw. die Leistungsversorgungseinheiten 510 und 512 kreuzweise gekoppelt (die Pfeilrichtungen kennzeichnen den Energiefluss). Die PoE-Stromversorgung des Gerätes wird aus beiden Leistungsentnahmeeinheiten 506 und 508 über die Dioden 516 oder eine andere geeignete Kopplung zusammengefasst und für die Eigenstromversorgung 518 des Gerätes verwendet (PoE In). Im laufenden Betrieb können die Leistungsentnahmeeinheiten sowie die Leistungsversorgungseinheiten 506 bis 512 über eine erweiterte Funktionalität verfügen. Für den Fall eines projektierbaren Leistungsbudgets kann z.B. die Leistungsklasse der Leistungsentnahmeeinheiten 506 und 508 mittels der Steuerlogik 514 umgeschaltet werden.

Gemäß einer weiteren Ausführungsform weist ein Feldgerät nur eine Leistungsentnahmeeinheit und eine Leistungsversorgungseinheit auf. Die entsprechenden Einheiten werden nach Aktivierung des Feldgeräts den entsprechenden Ports zugewiesen. Das in FIG 5 gezeigte Feldgerät weist somit eine Redundanz auf, da jeweils zwei Einheiten abgebildet sind.

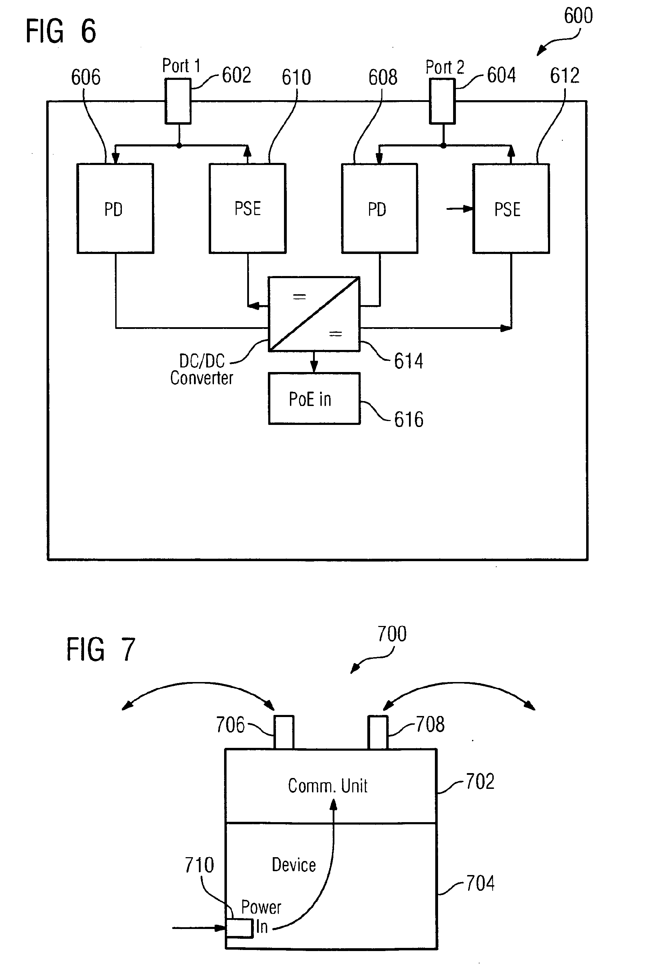

FIG 6 stellt schematisch in einem Blockdiagramm eines Feldgeräts 600 eine Potentialtrennung zwischen beiden Ports 602 und 604 des Feldgeräts 600 dar. Das Feldgerät weist dabei, wie zuvor das in FIG 5 beschriebene Feldgerät, zwei Leistungsversorgungseinheiten 610 und 612 und zwei Leistungsentnahmeeinheiten 606 und 608 auf. Das Gerät weist ferner DC/DC Wandler 614 (DC/DC Converter) sowie eine Eigenversorgung (PoE in) 616 auf. Die Leistungsentnahmeeinheit 606 sowie die Leistungsversorgungseinheit 610 sind dabei dem ersten Port 602 zugeordnet. Die Leistungsentnahmeeinheit 608 sowie die Leistungsversorgungseinheit 612 sind dabei dem zweiten Port 604 zugeordnet. Die Eigenstromversorgung des Feldgeräts 600 erfolgt aus beiden Leistungsentnahmeeinheiten 606 und 608 über die DC/DC-Wandler 614 in der Eigenversorgung 616 (PoE In) des Gerätes 600. Durch Verwendung der DC/DC-Wandler 614 lassen sich dabei der erste und der zweite Port 602 bzw. 604 galvanisch entkoppeln.

FIG 7 zeigt ein Blockdiagramm eines Feldgeräts 700 mit T-Stück Funktionalität. Die T-Stück Funktionalität wird im industriellen Umfeld häufig für Linien- und Ringtopologien gefordert. Bezüglich der Strom- /Spannungsversorgung der Linien PoE-Geräte bedeutet dies, dass das Feldgerät 700 eine Kommunikationseinheit 702 und weitere Gerätekomponenten 704 aufweist, wobei die Kommunikationseinheit 702 sowohl über die Kommunikations-Ports mittels PoE als auch über eine unabhängige Gerätestromversorgung mit elektrischer Energie versorgt werden kann. Die anderen Gerätekomponenten 704 werden von extern über einen Spannungseingang 710 mit elektrischer Energie versorgt. Im Falle eines Ausfalls der Gerätestromversorgung kann die Kommunikationseinheit mittels PoE über Ports 706 und 708 erfindungsgemäß weiter mit elektrischer Energie versorgt werden, wodurch eine Weiterleitung der Daten über die Kommunikationseinheit sichergestellt ist.

Gemäß einer weiteren Ausführungsform kann das Feldgerät über eine von PoE unabhängige Eigenstromversorgung verfügen, welche nicht nur die Kommunikationseinheit 702 mit Energie versorgt, sondern auch eine Weiterleitung dieser Energie über die Leistungsversorgungseinheiten an benachbarte Feldgeräte ermöglicht. Mit dieser Ausführungsform lassen sich innerhalb einer Linie zusätzliche Einspeisepunkte für PoE schaffen.

## Patentansprüche

1. Verfahren zur Inbetriebnahme von mindestens einem ersten Feldgerät (104), wobei das Verfahren die folgenden Schritte aufweist:
- Signalisierung eines ersten elektrischen Leistungsbedarfs (146) des ersten Feldgeräts über einen ersten Port (120) an eine Versorgungseinheit (102), wobei das erste Feldgerät über den ersten Port mittels einer ersten Kommunikationsverbindung (144) zuvor an die Versorgungseinheit angeschlossen worden ist;
- Aufnahme der Leistung entsprechend dem ersten Leistungsbedarf durch das erste Feldgerät über die erste Kommunikationsverbindung und den ersten Port, wodurch das erste Feldgerät aktiviert wird; und
wobei das Verfahren **gekennzeichnet ist durch** die weiteren Schritte:
- Zuweisung einer Leistungsentnahmeeinheit (124) des ersten Feldgeräts, die dem ersten Port oder einem zweiten Port (122) zugewiesen werden kann, an den ersten Port, wobei die Leistungsentnahmeeinheit als Verbraucher für die aufgenommene Leistung vorgesehen ist;
- Zuweisung einer Leistungsversorgungseinheit (126) des ersten Feldgeräts, die dem ersten Port oder einem zweiten Port (122) zugewiesen werden kann, an den zweiten Port (122), wobei die Leistungsversorgungseinheit für die Bereitstellung eines zweiten Leistungsbedarfs (152) über den zweiten Port vorgesehen ist.

2. Verfahren nach Anspruch 1, ferner mit den Schritten:
- Detektion eines zweiten Feldgeräts (106) über den zweiten Port (122) des ersten Feldgeräts (104), wobei das zweite Feldgerät zuvor an den zweiten Port (122) des ersten Feldgeräts über eine zweite Kommunikationsverbindung (150) angeschlossen worden ist;
- Ermittlung des zweiten Leistungsbedarfs (152) des zweiten Feldgeräts über die zweite Kommunikationsverbindung;
- Ermittlung des gesamten Leistungsbedarfs (154) aus dem ersten und zweiten Leistungsbedarf;
- Übermittlung des gesamten Leistungsbedarfs an die Versorgungseinheit;
- Aufnahme der gesamten Leistung entsprechend dem gesamten Leistungsbedarf, falls die Versorgungseinheit (102) die gesamte Leistung bereitstellen kann;
- Versorgung des zweiten Feldgeräts mit der Leistung entsprechend dem zweiten Leistungsbedarf (152) für den Fall, dass die gesamte Leistung erhalten wird.

3. Verfahren nach Anspruch 2, ferner mit den Schritten:
- Überwachung des vom ersten Feldgerät (104) gespeisten zweiten Ports (122);
- Unterbrechung der Versorgung des zweiten Feldgeräts (106) im Falle eines Kurzschlusses oder eines Überstroms in der zweiten Kommunikationsverbindung (150).

4. Verfahren nach Anspruch 2 oder 3, ferner mit den Schritten:
- Speicherung eines Teils einer erhaltenen elektrischen Energie;
- Überwachung des speisenden ersten Ports (120), wodurch eine Unterbrechung der Energieversorgung des ersten Feldgeräts detektiert werden kann;
- Vertauschung der Zuordnung der Leistungsentnahmeeinheit und der Leistungsversorgungseinheit zu dem ersten und zweiten Port, falls eine Unterbrechung der Energieversorgung detektiert wird.

5. Verfahren nach einem der Ansprüche 2 bis 4, wobei eine Änderung des zweiten Leistungsbedarfs (152) des zweiten Feldgeräts (106) durch das erste Feldgerät (104) detektierbar ist, wobei der geänderte gesamte Leistungsbedarf an die Versorgungseinheit übermittelt wird und wobei die Leistung entsprechend dem geänderten zweiten Leistungsbedarf dem zweiten Feldgerät zur Verfügung gestellt wird, für den Fall, dass die Leistung entsprechend dem geänderten gesamten Leistungsbedarf vom ersten Feldgerät aufgenommen werden kann.

6. Verfahren nach Anspruch 5, wobei der gesamte Leistungsbedarf (154) oder der geänderte gesamte Leistungsbedarf mittels des SNMP-Protokolls (Simple Network Management Protocol) an die Versorgungseinheit übermittelt wird.

7. Verfahren nach Anspruch 2, wobei das zweite Feldgerät (106) vom ersten Feldgerät (104) mittels des LLDP-Protokolls (Link Layer Discovery Protocol) detektiert wird.

8. Verfahren nach einem der Ansprüche 2 bis 7, wobei die Feldgeräte (104, 106) im stromlosen Zustand am ersten und am zweiten Port eine gerätespezifische Signatur aufweisen, wobei die gerätespezifische Signatur die Feldgeräte als Leistungsentnahmeeinheiten ausweist, wobei die gerätespezifische Signatur des nicht gespeisten Ports nach Empfang des Leistungsbedarfs deaktiviert wird.

9. Verfahren nach Anspruch 8, wobei die Ermittlung des zweiten Leistungsbedarfs (152) des zweiten Feldgeräts (106) über die gerätespezifische Signatur des zweiten Feldgeräts erfolgt.

10. Verfahren nach Anspruch 8 oder 9, wobei die gerätespezifische Signatur mittels einer Leistungsabschluss-Impedanz gemäß dem IEEE 802.3af Standard realisiert wird.

11. Verfahren nach einem der vorherigen Ansprüche, wobei die Kommunikationsverbindungen auf der Ethernet-Technologie basieren.

12. Verfahren nach einem der vorherigen Ansprüche, wobei es sich bei der Versorgungseinheit (102) um ein dem ersten Feldgerät (104) vorgeschaltetes Feldgerät oder um einen Power over Ethernet Switch oder einen Power Feeder handelt.

13. Feldgerät (104) mit:
- mindestens einem ersten (120) und einem zweiten Port (122);
- Mitteln zur Signalisierung seines Leistungsbedarfs (146) an dem ersten Port (120);
- mindestens einer Leistungsentnahmeeinheit (124), **dadurch gekennzeichnet,**
- **dass** das Feldgerät (104) mindestens eine Leistungsversorgungseinheit (126) aufweist, wobei die Leistungsversorgungseinheit dem ersten Port (120) zugewiesen werden kann, wobei die Leistungsversorgungseinheit für die Bereitstellung von elektrischer Leistung über den zugewiesenen Port vorgesehen ist,
- **dass** die Leistungsentnahmeeinheit (124) dem mindestens zweiten Port (122) zugewiesen werden kann, wobei die Leistungsentnahmeeinheit als Verbraucher für über den zugewiesenen Port erhaltene Leistung vorgesehen ist,
- **dass** Mittel zur Signalisierung des Leistungsbedarfs (146) des Feldgeräts (104) an dem zweiten Port (122) vorhanden sind und
- **dass** nach Bereitstellung des Leistungsbedarfs durch eine Versorgungseinheit (102) über den ersten Port (120) die Leistungsentnahmeeinheit (124) dem ersten Port (120) zuweisbar ist und die Leistungsversorgungseinheit (126) dem mindestens einen zweiten Port (122) zuweisbar ist.

14. Feldgerät (104) nach Anspruch 13, ferner mit:
- Mitteln zur Detektion eines zweiten Feldgeräts (106), wobei das zweite Feldgerät (106) zuvor an dem zweiten Port (122) des Feldgeräts (104) angeschlossen worden ist;
- Mitteln zur Ermittlung eines zweiten Leistungsbedarfs (152) des zweiten Feldgeräts;
- Mitteln zur Ermittlung eines gesamten Leistungsbedarfs (154), wobei der gesamte Leistungsbedarf den Leistungsbedarf des ersten Feldgeräts und den zweiten Leistungsbedarf umfasst;
- Mitteln zur Übermittlung des gesamten Leistungsbedarfs an die Versorgungseinheit (102), wobei das Feldgerät an die Versorgungseinheit zuvor angeschlossen worden ist;
- Mitteln zur Bereitstellung des zweiten Leistungsbedarfs für das zweite Feldgerät (106).

15. Feldgerät nach Anspruch 14, ferner mit:
- Mitteln zur Überwachung des vom ersten Feldgerät (104) gespeisten zweiten Ports (122);
- Mitteln zur Unterbrechung der Versorgung des zweiten Feldgeräts (106) im Falle eines Kurzschlusses oder eines Überstroms in der zweiten Kommunikationsverbindung (150).

16. Feldgerät nach Anspruch 14 oder 15, ferner mit:
- Mitteln zur Speicherung eines Teils einer erhaltenen elektrischen Energie;
- Mitteln zur Überwachung des speisenden ersten Ports, wodurch eine Unterbrechung der Energieversorgung des ersten Feldgeräts detektierbar ist;
- Mitteln zur Vertauschung der Zuordnung der Leistungsentnahmeeinheit und der Leistungsversorgungseinheit zu dem ersten bzw. dem zweiten Port, falls eine Unterbrechung der Energieversorgung detektiert wird.

17. Feldgerät nach einem der Ansprüche 14 bis 16, ferner mit:
- Mitteln zur Detektion einer Änderung des zweiten Leistungsbedarfs des zweiten Feldgeräts;
- Mitteln zur Anforderung des entsprechenden geänderten gesamten Leistungsbedarfs bei der vorgeschalteten Versorgungseinheit.

18. Feldgerät nach einem der vorhergehenden Ansprüche 13 bis 17, ferner mit einer Steuerlogik (514), wobei die Zuweisung der Leistungsversorgungseinheit (510, 512) und der Leistungsentnahmeeinheit (506, 508) durch die Steuerlogik gesteuert wird.

19. Feldgerät nach Anspruch 18, wobei die Leistungsversorgungseinheit (510, 512) und/oder die Leistungsentnahmeeinheit (506, 508) mehrere Betriebsarten aufweisen, wobei die Betriebsarten über die Steuerlogik (514) einstellbar sind.

20. Feldgerät nach einem der vorhergehenden Ansprüche 13 bis 19, wobei die mindestens eine Leistungsversorgungseinheit (610, 612) und die mindestens eine Leistungsentnahmeeinheit (606, 608) potentialgetrennt voneinander sind.

21. Feldgerät nach einem der Ansprüche 14 bis 20, ferner mit Mitteln zum Speichern des ersten Leistungsbedarfs, des zweiten Leistungsbedarfs und des gesamten Leistungsbedarfs.

## Claims

1. Method for starting up at least one first field device (104), wherein the method comprises the following steps of:
- signalling a first electrical power requirement (146) of the first field device via a first port (120) to a supplying unit (102), with the first field device previously having been connected to the supplying unit via the first port by means of a first communication link (144);
- drawing the power according to the first power requirement by the first field device via the first communication link and the first port, with the first field device being activated as a result; and
wherein the method is **characterised by** the further steps of:
- allocating a power drawing unit (124) of the first field device, which power drawing unit can be allocated to the first port or to a second port (122), to the first port, with the power drawing unit being provided as a consumer load for the drawn power; and
- allocating a power supplying unit (126) of the first field device, which power supplying unit can be allocated to the first port or to a second port (122), to the second port (122), with the power supplying unit being provided for the purpose of delivering a second power requirement (152) via the second port.

2. Method according to claim 1, further comprising the steps of:
- detecting a second field device (106) via the second port (122) of the first field device (104), with the second field device previously having been connected to the second port (122) of the first field device via a second communication link (150);
- determining the second power requirement (152) of the second field device via the second communication link;
- determining the total power requirement (154) from the first and second power requirements;
- transmitting the total power requirement to the supplying unit;
- drawing all of the power according to the total power requirement provided the supplying unit (102) can deliver all of the required power; and
- supplying the second field device with the power according to the second power requirement (152) provided all of the power is received.

3. Method according to claim 2, further comprising the steps of:
- monitoring the second port (122) fed by the first field device (104); and
- interrupting the supply to the second field device (106) in the event of a short-circuit or excess current in the second communication link (150).

4. Method according to claim 2 or 3, further comprising the steps of:
- storing a portion of the electrical energy received;
- monitoring the feeding first port (120), thereby enabling an interruption of the energy supply to the first field device to be detected; and
- transposing the assignment of the power drawing unit and the power supplying unit to the first and second ports if an interruption of the energy supply is detected.

5. Method according to one of claims 2 to 4, wherein a change in the second power requirement (152) of the second field device (106) is detectable by the first field device (104), with the changed total power requirement being transmitted to the supplying unit and with the power being made available to the second field device according to the changed second power requirement provided the power can be drawn by the first field device according to the changed total power requirement.

6. Method according to claim 5, wherein the total power requirement (154) or the changed total power requirement is transmitted to the supplying unit by means of the SNMP (Simple Network Management Protocol) protocol.

7. Method according to claim 2, wherein the second field device (106) is detected by the first field device (104) by means of the LLDP (Link Layer Discovery Protocol) protocol.

8. Method according to one of claims 2 to 7, wherein in the powerless state the field devices (104, 106) have a device-specific signature at the first and second ports, with the device-specific signature identifying the field devices as power drawing units, with the device-specific signature of the port not being fed being deactivated after reception of the power requirement.

9. Method according to claim 8, wherein the second power requirement (152) of the second field device (106) is determined via the device-specific signature of the second field device.

10. Method according to claim 8 or 9, wherein the device-specific signature is implemented by means of a power termination impedance in accordance with the IEEE 802.3af standard.

11. Method according to one of the preceding claims, wherein the communication links are based on Ethernet technology.

12. Method according to one of the preceding claims, wherein the supplying unit (102) is a field device connected upstream of the first field device (104) or a Power over Ethernet switch or a power feeder.

13. Field device (104) comprising:
- at least one first (120) and one second port (122);
- means for signalling its power requirement (146) to the first port (120);
- at least one power drawing unit (124),
**characterised in that**
- the field device (104) has at least one power supplying unit (126), with the power supplying unit being allocatable to the first port (120), with the power supplying unit being provided for the purpose of delivering electrical power via the allocated port,
- the power drawing unit (124) can be allocated to the at least one second port (122), with the power drawing unit being provided as a consumer load for power received via the allocated port,
- means for signalling the power requirement (146) of the field device (104) are present at the second port (122), and
- after the power requirement has been delivered by a supplying unit (102) via the first port (120) the power drawing unit (124) can be allocated to the first port (120) and the power supplying unit (126) can be allocated to the at least one second port (122).

14. Field device (104) according to claim 13, further comprising:
- means for detecting a second field device (106), with the second field device (106) previously having been connected to the second port (122) of the field device (104);
- means for determining a second power requirement (152) of the second field device;
- means for determining a total power requirement (154), with the total power requirement including the power requirement of the first field device and the second power requirement;
- means for transmitting the total power requirement to the supplying unit (102), with the field device previously having been connected to the supplying unit; and
- means for delivering the second power requirement for the second field device (106).

15. Field device according to claim 14, further comprising:
- means for monitoring device the second port (122) fed by the first field device (104); and
- means for interrupting the supply to the second field device (106) in the event of a short-circuit or excess current in the second communication link (150).

16. Field device according to claim 14 or 15, further comprising:
- means for storing a portion of the electrical energy received;
- means for monitoring the feeding first port, thereby enabling an interruption of the energy supply to the first field device to be detected; and
- means for transposing the assignment of the power drawing unit and the power supplying unit to the first and/or second port if an interruption of the energy supply is detected.

17. Field device according to one of claims 14 to 16, further comprising:
- means for detecting a change in the second power requirement of the second field device; and
- means for requesting the corresponding changed total power requirement from the upstream supplying unit.

18. Field device according to one of the preceding claims 13 to 17, further comprising control logic (514), wherein the allocation of the power supplying unit (510, 512) and the power drawing unit (506, 508) is controlled by the control logic.

19. Field device according to claim 18, wherein the power supplying unit (510, 512) and/or the power drawing unit (506, 508) have a plurality of operating modes, with the operating modes being settable via the control logic (514).

20. Field device according to one of the preceding claims 13 to 19, wherein the at least one power supplying unit (610, 612) and the at least one power drawing unit (606, 608) are potentially isolated from one another.

21. Field device according to one of claims 14 to 20, further comprising means for storing the first power requirement, the second power requirement and the total power requirement.

## Revendications

1. Procédé de mise en marche d'au moins un premier appareil ( 104 ) sur site, le procédé comportant les stades suivantes :
- signalisation d'un premier besoin ( 146 ) de puissance électrique du premier appareil sur site par un premier accès ( 120 ) à une unité ( 102 ) d'alimentation, le premier appareil sur site étant raccordé auparavant à l'unité d'alimentation par le premier accès au moyen d'une première liaison ( 144 ) de communication,
- absorption de la puissance correspondant au premier besoin de puissance par le premier appareil sur site par l'intermédiaire de la liaison de communication et du premier accès en sorte que le premier appareil sur site est activé ; et
dans lequel le procédé est **caractérisé par** les autres stades :
- affectation d'une unité ( 124 ) de prélèvement de puissance du premier appareil sur site, qui peut être affectée au premier accès ou à un deuxième accès ( 122 ), au premier accès, l'unité de prélèvement de puissance étant prévue comme utilisateur de la puissance absorbée ;
- affectation d'une unité ( 126 ) d'alimentation en puissance du premier appareil sur site, qui peut être affectée au premier accès ou à un deuxième accès ( 122 ), au deuxième accès ( 122 ), l'unité d'alimentation en puissance étant prévue pour la mise à disposition d'un deuxième besoin ( 152 ) de puissance par le deuxième accès.

2. Procédé suivant la revendication 1, comprenant en outre les stades :
- détection d'un deuxième appareil ( 106 ) sur site par le deuxième accès ( 122 ) du premier appareil ( 104 ) sur site, le deuxième appareil sur site ayant été raccordé auparavant au deuxième accès ( 122 ) du premier appareil sur site par une deuxième liaison ( 150 ) de communication ;
- détermination du deuxième besoin ( 152 ) de puissance du deuxième appareil sur site par la deuxième liaison de communication ;
- détermination de tout le besoin ( 154 ) de puissance composé du premier et du deuxième besoins de puissance,
- transmission de tout le besoin de puissance à l'unité d'alimentation ;
- absorption de toute la puissance correspondant à tout le besoin de puissance, si l'unité ( 102 ) d'alimentation peut mettre à la disposition toute la puissance ;
- alimentation du deuxième appareil sur site en la puissance correspondant au deuxième besoin ( 152 ) de puissance dans le cas où toute la puissance est obtenue.

3. Procédé suivant la revendication 2, ayant en outre les stades :
- contrôle du deuxième accès ( 122 ) alimenté par le premier appareil ( 104 ) sur site ;
- interruption de l'alimentation du deuxième appareil ( 106 ) sur site dans le cas d'un court-circuit ou d'une surintensité dans la deuxième liaison ( 150 ) de communication.

4. Procédé suivant la revendication 2 ou 3, ayant en outre les stades :
- accumulation d'une partie d'une énergie électrique obtenue ;
- contrôle du premier accès ( 120 ) d'alimentation, une interruption d'alimentation en énergie du premier appareil sur site pouvant être détectée ;
- échange de l'affectation de l'unité de prélèvement de puissance et de l'unité d'alimentation de puissance entre le premier et le deuxième accès si une interruption d'alimentation en énergie est détectée.

5. Procédé suivant l'une des revendications 2 à 4, dans lequel une modification du deuxième besoin ( 152 ) de puissance du deuxième appareil ( 106 ) sur site peut être détectée par le premier appareil ( 104 ) sur site, tout le besoin de puissance modifié étant transmis à l'unité d'alimentation et la puissance correspondant au deuxième besoin de puissance modifiée étant mise à disposition du deuxième appareil sur site dans le cas où la puissance correspondant à tout le besoin de puissance modifié peut être absorbée par le premier appareil sur site.

6. Procédé suivant la revendication 5, dans lequel tout le besoin ( 154 ) de puissance ou tout le besoin de puissance modifié est transmis à l'unité d'alimentation au moyen du protocole SNMP ( Simple Network Management Protocol ).

7. Procédé suivant la revendication 2, dans lequel le deuxième appareil ( 106 ) sur site est détecté par le premier appareil ( 104 ) sur site au moyen du protocole LLDP ( Link Layer Discovery protocol ).

8. Procédé suivant l'une des revendications 2 à 7, dans lequel les appareils ( 104, 106 ) sur site ont, à l'état sans courant sur le premier et sur le deuxième accès, une signature spécifique à l'appareil, la signature spécifique à l'appareil excluant les appareils sur site comme unités de prélèvement de puissance, la signature spécifique à l'appareil de l'accès non alimenté étant désactivée après réception du besoin de puissance.

9. Procédé suivant la revendication 8, dans lequel la détermination du deuxième besoin ( 152 ) de puissance du deuxième appareil ( 106 ) sur site s'effectue par la signature spécifique à l'appareil du deuxième appareil sur site.

10. Procédé suivant la revendication 8 ou 9, dans lequel la signature spécifique à l'appareil est réalisée au moyen d'une impédance de terminaison de puissance suivant la norme IEEE 802.3af.

11. Procédé suivant l'une des revendications précédentes, dans lequel les liaisons de communication reposent sur la technologie éthernet.

12. Procédé suivant l'une des revendications précédentes, dans lequel l'unité ( 102 ) d'alimentation est un appareil sur site en amont du premier appareil ( 104 ) sur site ou un power over éthernet switch ou un power feeder.

13. Appareil ( 104 ) sur site comprenant :
- au moins un premier ( 120 ) et un deuxième accès ( 122 ) ;
- des moyens de signalisation de son besoin ( 146 ) de puissance sur le premier accès ( 120 ) _{:}
- au moins une unité ( 124 ) de prélèvement de puissance ; **caractérisé**
- **en ce que** l'appareil ( 140 ) sur site a au moins une unité ( 126 ) d'alimentation en puissance, l'unité d'alimentation en puissance pouvant être affectée au premier accès ( 120 ), l'unité d'alimentation en puissance étant prévue pour la mise à disposition de puissance électrique par l'intermédiaire de l'accès affecté,
- **en ce que** l'unité ( 124 ) de prélèvement de puissance peut être affectée au au moins un deuxième accès ( 122 ), l'unité de prélèvement en puissance étant prévue comme utilisateur de la puissance obtenue par l'intermédiaire de l'accès affecté,
- **en ce qu'**il a des moyens de signalisation du besoin ( 146 ) de puissance de l'appareil ( 140 ) sur site sur le deuxième accès ( 122 ) et
- **en ce qu'**après la mise à disposition du besoin de puissance par l'unité ( 102 ) d'alimentation par l'intermédiaire du premier accès ( 120 ), l'unité ( 124 ) de prélèvement de puissance peut être affectée au premier accès ( 120 ) et l'unité ( 126 ) d'alimentation en puissance peut être affectée au au moins un deuxième accès ( 122 ).

14. Appareil ( 104 ) sur site suivant la revendication 13, ayant en outre :
- des moyens de détection d'un deuxième appareil ( 106 ) sur site, le deuxième appareil ( 106 ) sur site ayant été raccordé auparavant au deuxième accès ( 122 ) de l'appareil ( 104 ) sur site ;
- les moyens de détermination d'un deuxième besoin ( 152 ) de puissance du deuxième appareil sur site ;
- des moyens de détermination d'un besoin ( 154 ) total de puissance, le besoin total de puissance comprenant le besoin de puissance du premier appareil sur site et le deuxième besoin de puissance ;
- des moyens de transmission de tout le besoin de puissance à l'unité ( 102 ) d'alimentation, l'appareil sur site ayant été raccordé auparavant à l'unité d'alimentation ;
- des moyens de mise à disposition du deuxième besoin de puissance pour le deuxième appareil ( 106 ) sur site.

15. Appareil sur site suivant la revendication 14, ayant en outre :
- des moyens de contrôle du deuxième accès ( 122 ) alimenté par le premier appareil ( 106 ) sur site ;
- des moyens d'interruption de l'alimentation du deuxième appareil ( 106 ) sur site dans le cas d'un court-circuit ou d'une surintensité dans la deuxième liaison ( 150 ) de communication.

16. Appareil sur site suivant la revendication 14 ou 15, ayant en outre :
- des moyens d'alimentation en une partie d'une énergie électrique obtenue ;
- des moyens de contrôle du premier accès d'alimentation de manière à pouvoir détecter une interruption de l'alimentation en énergie du premier appareil sur site ;
- des moyens d'échange de l'affectation de l'unité de prélèvement de puissance et de l'unité d'alimentation de puissance au premier et au deuxième accès si l'interruption d'alimentation en énergie est détectée.

17. Appareil sur site suivant l'une des revendications 14 à 16, ayant en outre :
- des moyens de détection d'une modification du deuxième besoin de puissance du deuxième appareil sur site ;
- des moyens de demande de tout le besoin de puissance modifié correspondant auprès de l'unité d'alimentation montée en amont.

18. Appareil sur site suivant l'une des revendications précédentes 13 à 17, ayant en outre une logique ( 514 ) de commande, l'affectation de l'unité ( 510 ; 512 ) d'alimentation de puissance et de l'unité ( 506, 508 ) de prélèvement de puissance étant commandée par la logique de commande.

19. Appareil sur site suivant la revendication 18, dans lequel l'unité ( 510, 512 ) d'alimentation de puissance et/ou l'unité ( 506, 508 ) de prélèvement de puissance ont plusieurs types de fonctionnement, les types de fonctionnement pouvant être réglés par la logique ( 514 ) de commande.

20. Appareil sur site suivant l'une des revendications précédentes 13 à 19, dans lequel la au moins une unité ( 610, 612 ) d'alimentation de puissance et la au moins une unité ( 606, 608 ) de prélèvement de puissance sont séparées en potentiel l'une de l'autre.

21. Appareil sur site suivant l'une des revendications précédentes 14 à 20, ayant en outre des moyens d'accumulation du premier besoin de puissance du deuxième moyen de puissance et de tout le besoin de puissance.
